# DEMANDE DE BREVET EUROPEEN

(11) **EP 1 104 737 A1**
(43) Date de publication de la demande: **06.06.2001**
(21) Numéro de dépôt: 99402989.0
(22) Date de dépôt: 01.12.1999
(51) Int. Cl.: B62D 65/00

(54) **Dispositif de transfert d'objets**

(71) Demandeur: Dürr Automotion, 91300 Massy (FR)
(72) Inventeur: Riat, Jean-Paul, 92000 Nanterre (FR)
(74) Mandataire: Briat, Sophie

(57) **Abrégé**

L'invention concerne un dispositif de transfert (10) d'objets, chaque objet étant supporté par une balancelle (12), qui comprend des moyens de suspension (16) de balancelle et des moyens d'entraînement principaux permettant le déplacement de la balancelle sur une ligne de transfert principale (18).

Selon l'invention, les moyens de suspension (16) de la balancelle possèdent un premier élément de système d'accouplement (42) et une surface d'appui (36), les moyens d'entraînement principaux (20, 22, 24) comportent un deuxième élément de système d'accouplement (30) pouvant coopérer de manière réversible avec ledit premier élément de système d'accouplement (42) de façon à former une liaison amovible entre les moyens de suspension (16) et les moyens d'entraînement principaux (20, 22, 24) et le dispositif de transfert (10) comporte en outre des moyens de déchargement agencés de manière compacte au dessus et à côté de la balancelle et permettant la séparation de la balancelle (12) de la ligne de transfert principale (18) vers une ligne de transfert secondaire (19).

## Description

L'invention concerne un dispositif de transfert d'objets, chaque objet étant supporté par une balancelle, qui comprend des moyens de suspension de balancelle possédant un premier élément de système d'accouplement et au moins une surface d'appui, des moyens d'entraînement principaux permettant le déplacement de la balancelle sur une ligne de transfert principale et comportant un deuxième élément de système d'accouplement pouvant coopérer de manière réversible avec ledit premier élément de système d'accouplement de façon à former une liaison amovible entre les moyens de suspension et les moyens d'entraînement principaux, et des moyens de déchargement permettant la séparation de la balancelle de la ligne de transfert principale et comportant des moyens de support pouvant coopérer avec ladite surface d'appui et aptes à former, grâce à des moyens d'entraînement secondaires, une ligne de transfert secondaire, et des moyens de séparation possédant des moyens de déplacement vertical des moyens de support, permettant l'accouplement ou le désaccouplement entre le premier et le deuxième éléments de système d'accouplement.

Dans une chaîne de production, par exemple une chaîne de montage de véhicule automobile, chaque poste de travail requiert un temps de passage différent de l'objet traité selon le type d'opération réalisée. Pour remédier à cette absence d'uniformité du temps de passage à chaque poste de travail, certains dispositifs de transfert possèdent une gestion individuelle de la vitesse de déplacement de chaque balancelle. Cette solution est économiquement très lourde à supporter.

L'invention entend remédier à ces inconvénients en proposant un dispositif de transfert dont la plus grande partie constitutive est peu onéreuse, de par une construction simplifiée, qui permet toutefois, à certains endroits, une vitesse de déplacement des balancelles différente par rapport au reste du dispositif de transfert, voire une vitesse nulle compatible avec un poste de travail fixe requérant le passage de la balancelle dans une cabine.

L'invention vise à fournir un dispositif de transfert de construction simple (chaîne monorail, vitesse de transfert constante pour toutes les balancelles) sur laquelle il est possible, aux endroits voulus, de réaliser un traitement sur l'objet porté par la balancelle alors que celle-ci se déplace à une vitesse différente, tout en garantissant à chaque instant une position stable de la balancelle.

L'invention vise également à fournir un dispositif de transfert d'objets le plus compact possible, notamment en hauteur, afin de correspondre à un volume limité conciliable avec les impératifs économiques régissant le volume maximum admissible pour les cabines de traitement telles que, dans le cas où le dispositif de transfert est utilisé sur une chaîne de fabrication automobile, des cabines de peinture ou d'injection de cire dans les corps creux de la carrosserie.

A cet effet, la présente invention se caractérise en en ce que ledit premier élément de système d'accouplement comprend au moins un ergot, en ce que ledit deuxième élément de système d'accouplement comprend au moins un crochet ouvert vers le haut, en ce que les moyens de support comportent un premier et un deuxième chemins de galets et en ce que les moyens de suspension de la balancelle possèdent en outre deux entretoises reliées d'une part à la balancelle et d'autre part entre elles, à chaque extrémité, par une première et une deuxième barres de déchargement horizontales dont la surface inférieure constitue ladite surface d'appui, lesdites barres de déchargement horizontales étant parallèles à ladite ligne de transfert principale et situées sous les entretoises, sensiblement de part et d'autre de ladite balancelle, chaque entretoise étant surmontée par au moins un ergot.

Les avantageuses dispositions énoncées dans les revendications 2 à 10 sont en outre de préférences adoptées.

L'avantage principal de l'invention réside dans la possibilité de décrocher les balancelles à un endroit de la ligne de transfert principale où l'opération de traitement à réaliser sur l'objet requiert une vitesse d'avancement de la balancelle différente, éventuellement nulle, avant de raccrocher les balancelles dans la ligne de transfert principale qui constitue un circuit sans fin de conception très économique puisqu'elle est constituée d'une chaîne monorail à vitesse unique. Un autre avantage essentiel réside en ce que ces opérations de décrochage et d'accrochage sont effectuées en maintenant en position stable la balancelle.

Une fois que la balancelle est décrochée, on peut concevoir plusieurs circuits possibles avant le retour de cette balancelle sur la ligne de transfert principale. Dans le cas le plus simple, la balancelle est décrochée de la ligne de transfert principale, puis descendue sur la ligne de transfert secondaire le long de laquelle on réalise le traitement prévu et on remet, par accrochage, la balancelle dans la ligne de transfert principale, au même endroit que lors du décrochage. A cette fin, par exemple, la ligne de transfert secondaire qui possède un début et une fin, est réglée selon une deuxième vitesse d'avancement, supérieure à la première vitesse de déplacement de la ligne de transfert principale, l'objet porté par la balancelle pouvant ainsi être traité au niveau d'un poste fixe, situé par exemple au niveau de l'extrémité finale de cette ligne de transfert secondaire, avant de réintégrer son emplacement initial sur la ligne de transfert principal.

Dans un autre cas de figure, le dispositif de transfert selon l'invention peut servir d'aiguillage entre deux chaînes de transfert en boucle fermée possédant des vitesses de déplacement différentes, l'invention permettant alors de faire passer les balancelles d'une chaîne de transfert à l'autre. Cet aiguillage peut être réalisé entre des chaînes de transfert parallèles entre elles, éventuellement placées sur plusieurs niveaux, ou des chaînes de transfert radiales convergeant vers un poste de déchargement rotatif. Pour un tel aiguillage, ou s'il s'avère plus généralement nécessaire d'écarter transversalement la balancelle décrochée de la ligne de transfert principale, le dispositif de transfert sera alors munis de moyens de déplacement latéral de la balancelle conformes aux revendications 9 et 10.

L'invention sera mieux comprise, et les caractéristiques secondaires et leurs avantages apparaîtront au cours de la description du mode de réalisation donnée ci-dessous à titre d'exemple. Il est entendu que la description et les dessins ne sont donnés qu'à titre indicatif et non limitatif.

Il sera fait référence aux dessins annexés, dans lesquels :
- la figure 1 est une vue en section longitudinale selon la direction I-I de la figure 2 d'une portion du dispositif de transfert selon l'invention dans le cas où une balancelle est au niveau des moyens de déchargement ;
- la figure 2 est une vue en section transversale selon la direction II-II de la figure 1 représentant l'entretoise de l'avant de la balancelle et la coopération entre les moyens de suspension de la balancelle et une partie des moyens de déchargement;
- la figure 3 est une vue partielle agrandie de la figure 2 dans la zone de liaison entre les moyens de suspension et les moyens de déchargement, la balancelle étant accrochée le long de la ligne de transfert principale au niveau des moyens de déchargement ;
- la figure 4 est une vue identique à celle de la figure 3 dans le cas où la balancelle a été décrochée de la ligne de transfert principale par les moyens de déchargement ;
- la figure 5 est une vue longitudinale schématique des moyens de déchargement de la balancelle ;
- la figure 6 est une vue latérale partielle de la figure 5 selon la direction VI -VI de la figure 5 ; et,
- la figure 7 est une vue du dessus des moyens de déchargement placés à côté et parallèlement à la ligne de transfert principale.

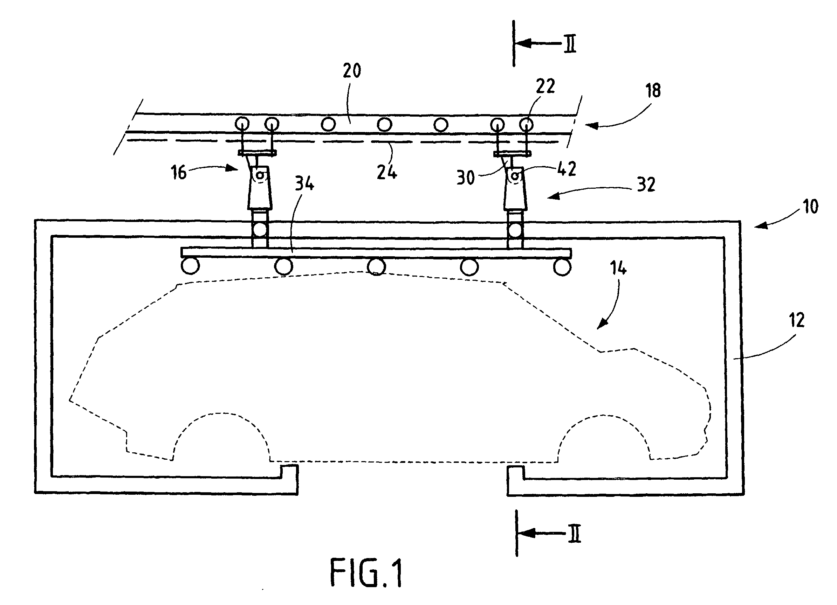

On se reportera maintenant à la figure 1 sur laquelle une balancelle circulant sur la ligne de transfert principale se trouve en regard des moyens de déchargement. Le dispositif de transfert 10 permet le déplacement d'un certain nombre de balancelles 12 supportant des véhicules automobiles 14 en cours de fabrication. Des moyens de suspension 16 de la balancelle 12 sont fixés au sommet de la balancelle et la relient à la ligne de transfert principale 18 le long de laquelle sont convoyées les balancelles 12 d'un poste de travail à l'autre.

De façon classique la ligne de transfert principale 18 est une chaîne en circuit fermé le long de laquelle sont placés les postes de travail successifs pour le montage et la production d'un véhicule automobile.

Dans le mode de réalisation préféré, on utilisera pour la ligne de transfert principale 18 une chaîne monorail. La ligne de transfert principale 18 est un convoyeur monorail qui comprend un rail unique 20 sur lequel roulent des galets 22 pivotants qui sont en rotation constante à vitesse uniforme, selon une première vitesse de défilement, par exemple 6m/min. Ces galets 22 sont tractés par une chaîne de transmission (non représentée) d'axe 24. Le rail 20 possède, en section transversale, un profilé 20 en forme de I sur lequel, grâce à la rotation des galets 22, va coulisser un trolley 26 relié à la balancelle 12.

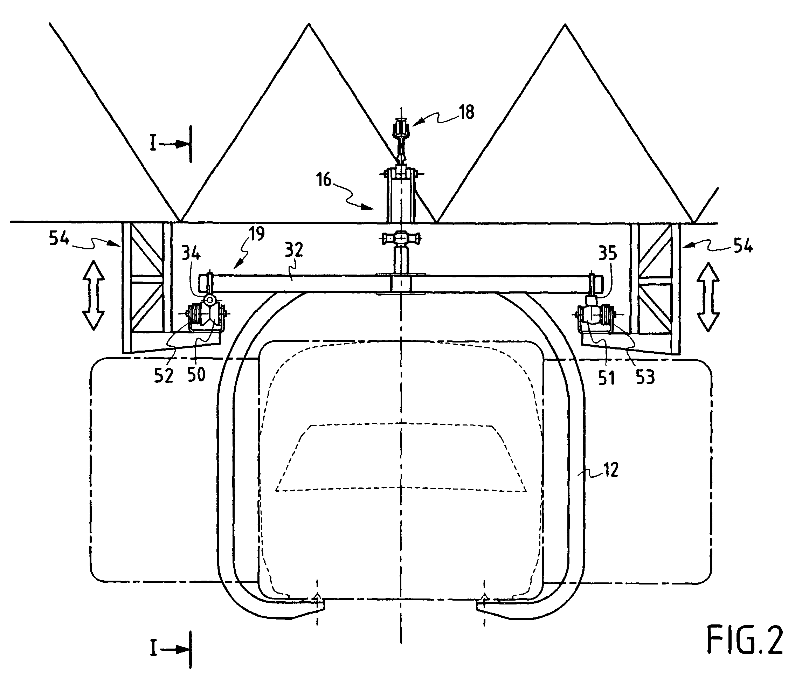

Pour coopérer avec le rail 20 à section en forme de I, le trolley 26 possède, de préférence, en vue de face (figures 2 à 4), une forme d'anneau ouvert ou de Ω à l'envers avec ses deux extrémités libres 28 placées de part et d'autre de l'aile centrale verticale du rail de transport 20.

La chaîne de transmission est fixée sur le trolley 26 de façon à l'entraîner dans son mouvement de déplacement le long de la ligne de transfert principale 18. Une paire de crochets 30 avec une ouverture vers le haut, est reliée dans le prolongement vertical, vers le bas, de chaque trolley 26, deux paires de crochets consécutifs servant à supporter les moyens de suspension 16 auxquels est fixée la balancelle 12. Les crochets 30 de chaque paire constituent les extrémités libres d'un étrier 30'en forme de U renversé, les ouvertures desdits crochets étant alignées perpendiculairement à la ligne de transfert principale 18.

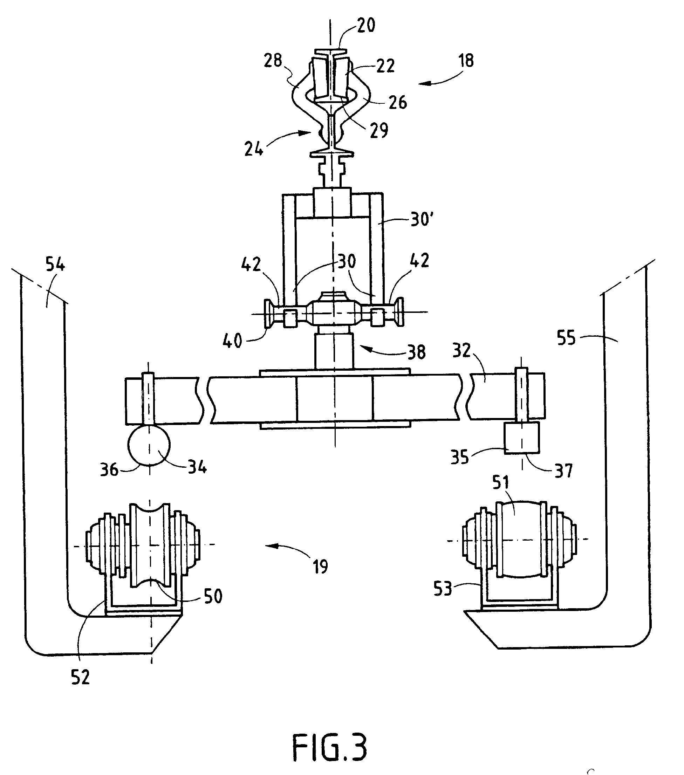

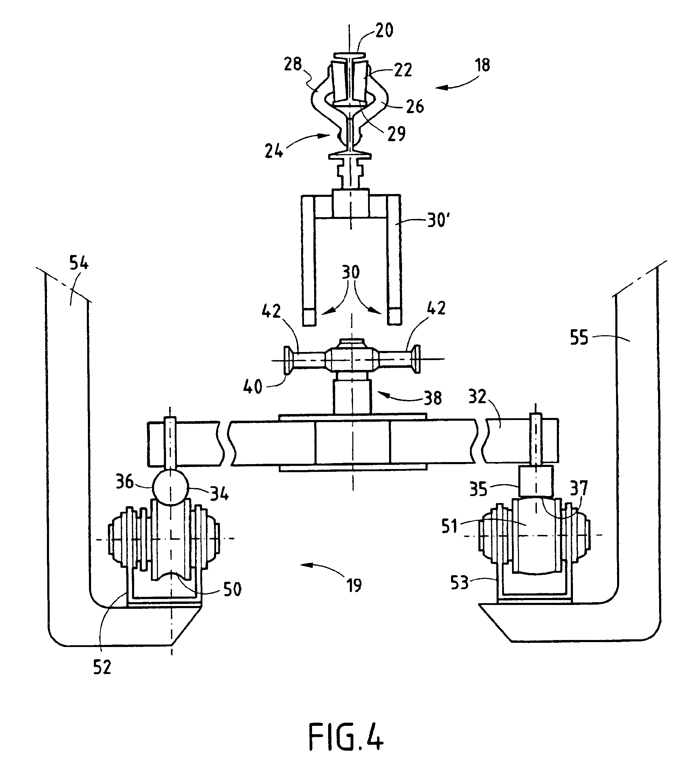

Le trolley 26 possède (figures 3 et 4) deux extrémités libres 28 sur lesquelles sont montés rotatifs, de façon symétrique, deux galets 22. La surface de roulement 29 ou périphérie de chaque galet 22 repose sur ce rail 20, au niveau de la surface supérieure de l'aile horizontale inférieure du I.

On se reportera à la figure 3 illustrant la balancelle accrochée sur la ligne de transfert principale, en regard des moyens de déchargement.

Les moyens de suspension de balancelle 16 comprennent deux entretoises horizontales 32 fixées à l'avant et à l'arrière de la balancelle 12, ces deux entretoises étant reliées entre elles, au niveau de leurs extrémités, par deux barres de déchargement horizontales 34 et 35. La surface inférieure 36 et 37 des barres de déchargement 34 et 35 est nue et libre d'accès car elle constitue une surface d'appui pour le déchargement de la balancelle. Comme il apparaît sur la figure 2, les barres de déchargement horizontales 34 et 35 sont placées de part et d'autre de la balancelle à proximité de cette dernière. Ainsi, dans la cas où la balancelle transporte un véhicule 14, cet agencement spatial évite que les moyens de déchargement de la balancelle ne dépassent latéralement au-delà des portières ouvertes (représentées en traits pointillés), tout en créant un encombrement en hauteur minimal.

Comme illustré, les barres de déchargement 34 et 35 sont placées sous les entretoises 32, lesquelles sont prolongées verticalement vers le haut, en leur centre, par un croisillon 38. Ce croisillon 38 comporte deux saillies latérales ou ergots cylindriques 42 dont l'extrémité libre est élargie en formant une butée 40.

Les ergots 42 forment des axes matériels horizontaux alignés, parallèles à l'entretoise 32 qui les porte et perpendiculaires aux barres de déchargement 34 et 35. Ces ergots 42 constituent le point d'accrochage des moyens de suspension 16 sur la ligne de transfert principale 18.

A cet effet, la distance séparant les deux crochets 30 de chaque paire permet à ces derniers de retenir simultanément les deux ergots 42 du même croisillon 38.

Dans le cas de la figure 3, les ergots 42 sont placés dans l'ouverture d'une paire de crochets 30 de sorte que deux paires de crochets 30 consécutives placées sur la ligne de transfert principale 18 supportent une balancelle 12. Les deux points d'accrochage (deux ergots 42) assurent une très bonne stabilité de la balancelle dans sa position accrochée et minimise les risques de décrochage intempestif.

Dans le mode de réalisation préférentiel illustré, le système d'accouplement est composé d'une paire de crochets 30 coopérant avec un ergot double 42 mais d'autres systèmes d'accouplement peuvent être envisagés pour relier de façon non permanente les moyens de suspension de balancelle 16 aux moyens d'entraînement principaux constituant la ligne de transfert principale 18 -par exemple on peut envisager d'autres liaisons mécaniques ou une liaison magnétique entre des aimants-.

On va maintenant décrire, en relation avec les figures 3 et 4, la situation dans laquelle une balancelle se trouve en regard des moyens de déchargement du dispositif de transfert de l'invention. Lorsque la balancelle 12 arrive en regard des moyens de déchargement placés en position haute, les barres de déchargement 34 et 35 arrivent en contact chacun sur un chemin de galets 50 ou 51 pouvant supporter la barre de déchargement 34 ou 35 correspondante.

Ces chemins de galets sont composés de galets 50 ou 51 d'axe horizontal et orthogonal à la ligne de transfert principale 18, c'est-à-dire parallèle à la direction principale de l'ergot 42.

Ces galets 50 (51) sont montés pivotants sur une poutre de section transversale en forme de U 52 (53), ce qui constitue ainsi un chemin de roulement pour la barre de déchargement 34 (35).

Cette poutre 52 (53) en forme de U est fixée sur au moins une crémaillère 54 (55) constituée d'une barre en forme de L dont la face supérieure de la partie horizontale est fixée rigidement sous le fond de la poutre 52 (53) en forme de U.

On comprend que les deux crémaillères 54 et 55 sont éloignées d'une distance telle que les deux chemins de galets sont disposés parallèlement avec un écart correspondant sensiblement à la distance séparant les barres de déchargement 34 et 35.

Ainsi, en positon décrochée, la balancelle 12 est supportée de manière symétrique, grâce aux deux barres de déchargement 34 et 35, sur les deux chemins de galets 50 et51, ce qui crée une grande stabilité de la position de la balancelle donc une sécurité maximale pour les équipements et/ou les opérateurs travaillant à proximité ou sous la balancelle.

Pour pallier aux écarts de positionnement de ces barres 34 et 35, la première barre de déchargement 34 présente une section transversale circulaire apte à coopérer avec le premier chemin de galets composé de galets en forme de poulie à rainure 50 et la deuxième barre de déchargement 35 présente une section transversale carrée apte à coopérer avec le deuxième chemin de galets composé de galets en forme de cylindre de section circulaire ou de tonneau 51. Ainsi, on comprend que la première barre de déchargement 34 va se loger dans la rainure des galets 50 composant premier chemin de galets, tandis que la deuxième barre de déchargement 35 repose sur les galets 51 avec une certaine liberté de débattement latéral, la surface des galets 51 étant plus large que celle de la deuxième barre de déchargement 35 du deuxième chemin de galets. De cette manière, on garantit l'auto-positionnement de la balancelle sur les chemins de galets.

Lorsque la balancelle 12 arrive en regard des moyens de déchargement et qu'il est prévu une séparation de la balancelle 12 de la ligne de transfert principale 18, un mouvement vertical ascendant des crémaillères 54 et 55 permet le soulèvement des chemins de galets 50 et 51, des barres de déchargement 34 et 35, des entretoises 32, des croisillons 38 et des ergots 42 qui sortent de leur logement constitué par la boucle ouverte des crochets 30.

La seconde étape du déchargement va consister à faire avancer la balancelle 12 ainsi décrochée de la ligne de transfert principale 18 grâce à un élément d'entraînement secondaire reliant entre eux les galets 50 dudit premier chemin de roulement de façon à permettre leur déplacement, le long d'une ligne de transfert secondaire 19 ainsi crée selon une deuxième vitesse supérieure à ladite première vitesse (par exemple 40m/min).

Avantageusement, une des extrémités de cette ligne de transfert secondaire, par exemple, l'extrémité aval, est munie d'un poste de traitement fixe ou arrêté, présentant une cabine dans laquelle pénètre la balancelle.

Grâce à la conception très compacte, notamment en hauteur, du dispositif de transfert selon la présente invention, notamment au niveau des moyens de suspension de la balancelle, on peut appliquer ce dispositif de transfert sur une chaîne de montage munie d'une ligne de transfert secondaire équipée d'une cabine de traitement de l'objet porté par la balancelle, cette cabine pouvant présenter un volume limité.

De manière additionnelle et facultative, on peut écarter la balancelle 12 ainsi décrochée de la ligne de transfert principale 18 grâce à des moyens de déplacement latéral de la balancelle reliés aux crémaillères 54 et 55 qui permettent le soulèvement et le support d'une balancelle 12.

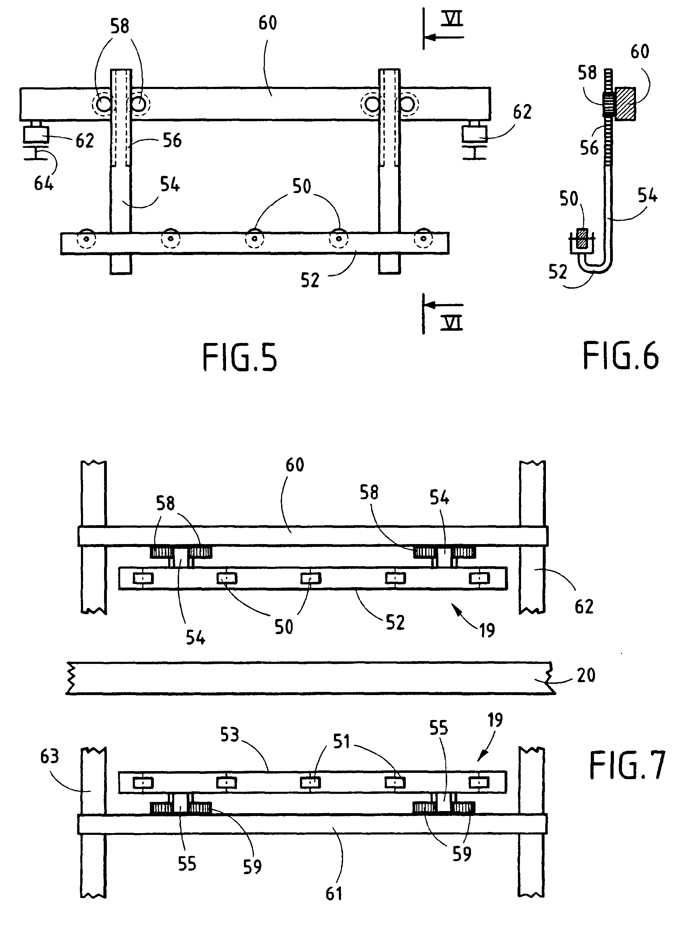

On va maintenant décrire en détail le système de déchargement de balancelle illustré sur les figures 5 à 7, qui est disposé le long de la ligne de transfert principale 18. Les deux crémaillères 54 (55) sont placées à une certaine distance l'une de l'autre et leur partie basse supporte les deux parties d'extrémité de la poutre 52 en forme de U à l'intérieur de laquelle sont répartis à égale distance les galets 50 (51), les galets 50 étant reliés entre eux par un élément d'entraînement tel qu'une chaîne qui engendre une ligne de transfert secondaire 19.

La partie haute des crémaillères 54 (55) porte des dents 56 lui permettant de prendre appui sur au moins deux pignons 58 (59) d'axe horizontal placés de part et d'autre de la crémaillère et montés pivotants sur une poutre horizontale supérieure 60 (61), parallèle à la poutre en forme de U 52 (53), et parallèle à la ligne de transfert principale 18, c'est-à-dire au rail 20.

Pour permettre le mouvement de déplacement latéral des moyens de déchargement supportant la balancelle qui est écartée de la chaîne de transfert principale, la poutre horizontale supérieure 60 (61) porte à chacune de ses extrémités un coulisseau 62 (63) perpendiculaire à la direction principale de la poutre 60 (61) et pouvant éventuellement se déplacer par roulement ou par coulissement sur un rail 64 horizontal qui est orthogonal à la ligne de transfert principale 18 et qui constitue le chemin de roulement pour le déplacement latéral.

Ainsi grâce à la crémaillère 54 (55), un mouvement de soulèvement peut être appliqué sur une balancelle 12 pour la décrocher de la ligne de transfert principale 18, puis cette balancelle 12 est éventuellement écartée du rail 20 selon un déplacement latéral engendré par un mouvement glissant entre les coulisseaux 62 (63), reliés à la poutre horizontale supérieure 60 (61), et les rails horizontaux 64.

On comprend que les galets 50 et 51 constituent respectivement un premier et un deuxième chemins de galets permettant le déplacement d'une balancelle selon une vitesse différente de la première vitesse de la ligne de transfert principale) (par exemple seconde vitesse plus rapide puis traitement sur poste arrêté) pour la réalisation d'une opération de longue durée sur l'objet transporté par la balancelle. Les galets 50 ont leur propre système de mise en rotation grâce à des chaînes en boucle (pouvant être remplacées par une courroie ou tout autre système équivalent) reliant deux galets consécutifs et un moteur d'entraînement qui met en rotation au moins un galet 50 du chemin de galets.

Lorsque la balancelle 12 arrive à l'autre extrémité des poutres 52 et 53 en forme de U, on réalise en sens inverse des opérations décrites précédemment pour accrocher à nouveau la balancelle 12 sur les mêmes crochets 30 la portant initialement afin que cette balancelle reprenne le circuit normal de la ligne de transfert principale 18.

Pour cela, si un déplacement latéral de la balancelle a été opéré, les moyens de déchargement se rapprochent du rail 20 par coopération entre les coulisseaux 62 et 63 et les rails horizontaux 64, et lorsque les ergots 42 se trouvent juste au dessus des crochets 30, les crémaillères 54 sont abaissées de sorte que les ergots 42 prennent appui dans le fond des creux des crochets 30 et les barres de déchargement 34 et 35 sont libérées de leur appui sur les galets 50 et 51.

## Revendications

1. Dispositif de transfert (10) d'objets, chaque objet étant supporté par une balancelle (12), qui comprend des moyens de suspension (16) de balancelle possédant un premier élément de système d'accouplement (42) et au moins une surface d'appui (36, 37), des moyens d'entraînement principaux (20, 22, 24) permettant le déplacement de la balancelle sur une ligne de transfert principale (18) et comportant un deuxième élément de système d'accouplement (30) pouvant coopérer de manière réversible avec ledit premier élément de système d'accouplement (42) de façon à former une liaison amovible entre les moyens de suspension (16) et les moyens d'entraînement principaux (20, 22, 24), et des moyens de déchargement permettant la séparation de la balancelle (12) de la ligne de transfert principale (18) et comportant:
- des moyens de support (50, 51) pouvant coopérer avec ladite surface d'appui (36, 37) et aptes à former, grâce à des moyens d'entraînement secondaires, une ligne de transfert secondaire (19), et
- des moyens de séparation possédant des moyens de déplacement vertical (54, 55, 56, 58) des moyens de support, permettant l'accouplement ou le désaccouplement entre le premier et le deuxième éléments de système d'accouplement,
caractérisé en ce que ledit premier élément de système d'accouplement comprend au moins un ergot (42), en ce que ledit deuxième élément de système d'accouplement comprend au moins un crochet (30) ouvert vers le haut, en ce que les moyens de support comportent un premier et un deuxième chemins de galets (50, 51) et en ce que les moyens de suspension (16) de la balancelle possèdent en outre deux entretoises (32) reliées d'une part à la balancelle et d'autre part entre elles, à chaque extrémité, par une première et une deuxième barres de déchargement horizontales (34, 35) dont la surface inférieure constitue ladite surface d'appui (36, 37), lesdites barres de déchargement horizontales (34) étant parallèles à ladite ligne de transfert principale et situées sous les entretoises (32), sensiblement de part et d'autre de ladite balancelle (12), chaque entretoise (32) étant surmontée par au moins un ergot (42).

2. Dispositif de transfert (10) selon la revendication 1, caractérisé en ce que ladite première barre de déchargement (34) présente une section transversale circulaire apte à coopérer avec ledit premier chemin de galets (50) composé de galets en forme de poulie à rainure (50) et en ce que ladite deuxième barre de déchargement (35) présente une section transversale carrée apte à coopérer avec ledit deuxième chemin de galets (51) composé de galets en forme de cylindre de section circulaire ou de tonneau (51).

3. Dispositif de transfert (10) selon la revendication 1 ou 2, caractérisé en ce que ledit premier élément de système d'accouplement comprend deux ergots (42) situés dans le prolongement l'un de l'autre parallèlement à ladite entretoise (32) qui les supporte sensiblement en son centre, en ce que ledit deuxième élément de système d'accouplement comprend deux crochets (30) disposés chacun à l'une des extrémités libres d'un étrier (30') en forme de U renversé, les ouvertures desdits crochets étant alignées perpendiculairement à la ligne de transfert principale (18), la distance séparant les deux crochets (30) permettant à ces derniers de retenir simultanément les deux ergots (42).

4. Dispositif de transfert (10) selon l'une quelconque des revendications précédentes, caractérisé en ce que les moyens d'entraînement principaux comportent en outre une chaîne de transfert monorail sur laquelle lesdits crochets (30) sont régulièrement espacés et se déplacent à une première vitesse.

5. Dispositif de transfert (10) selon la revendication 4, caractérisé en ce que lesdits galets (50, 51) sont montés pivotants dans une poutre en horizontale (52, 53) de section en forme de U, les galets (50) dudit premier chemin de roulement étant en outre reliés entre eux par un élément d'entraînement secondaire de façon à permettre leur déplacement le long de ladite ligne de transfert secondaire à une deuxième vitesse.

6. Dispositif de transfert (10) selon la revendication 5, caractérisé en ce que ladite deuxième vitesse est supérieure à ladite première vitesse.

7. Dispositif de transfert (10) selon la revendication 5, caractérisé en ce que ladite ligne de transfert secondaire est équipée d'une cabine de traitement de l'objet porté par la balancelle.

8. Dispositif de transfert selon la revendication 5, caractérisé en ce que les moyens de déplacement vertical comprennent au moins une crémaillère (54, 55) verticale fixée à chaque poutre en U, le mouvement de translation verticale de chaque crémaillère étant permis par engrènement entre les dents (56) de la crémaillère avec au moins deux pignons (58) d'axe horizontal placés de part et d'autre de la crémaillère (54, 55) et montés sur une poutre horizontale supérieure (60) et parallèle à la ligne de transfert principale (18).

9. Dispositif de transfert selon la revendication 8, caractérisé en ce qu'il comprend, en outre, des moyens de déplacement latéral de la balancelle, reliés aux moyens de support (50, 51) et aux moyens de déplacement vertical (54, 55, 56, 58), et permettant un déplacement des moyens de support en position soulevée selon une direction orthogonale à la ligne de transfert principale (18).

10. Dispositif de transfert selon la revendication 9, caractérisé en ce que les moyens de déplacement latéral comprennent au moins un rail horizontal (64) orthogonal à la ligne de transfert principale (18) et constituant le chemin de roulement desdites poutres horizontales (60) formant coulisseau.
